Europäisches Patentamt

European Patent Office

Office européen des brevets

(11) Publication number: **0 346 952**
**A2**

## EUROPEAN PATENT APPLICATION

(21) Application number: **89116115.0**

(22) Date of filing: **17.07.86**

(51) Int. Cl.⁴: **A01J 5/04 , A01J 5/06 , A01J 5/08 , A01K 1/12**

(30) Priority: **19.07.85 NL 8502082**
**19.07.85 NL 8502083**

(43) Date of publication of application:
**20.12.89 Bulletin 89/51**

(60) Publication number of the earlier application in accordance with Art.76 EPC: **0 209 205**

(84) Designated Contracting States:
**DE FR GB NL SE**

(71) Applicant: **C. van der Lely N.V.**
**Weverskade 10 P.O. Box 26**
**NL-3155 ZG Maasland(NL)**

(72) Inventor: **van der Lely, Cornelis**
**7 Brüschenrain**
**Zug(CH)**

(74) Representative: **Mulder, Herman et al**
**Octrooibureau Van der Lely N.V. Weverskade**
**10 P.O. Box 26**
**NL-3155 ZG Maasland(NL)**

(54) **An implement for milking animals, such as cows.**

(57) A milking implement for animals, such as cows, comprises a milking cluster (11) with teat cups (14) which can be attached to the teats (31) of an animal's udder (30). The milking cluster (11) with the teat cups (14) are encompassed by an envelope (12) that can be placed around the udder (30) of the animal. By means of a carrying member (13) supporting the teat cups (14) the envelope can be attached to the body of the animal. The teat cups (14) are movable with respect to each other in a horizontal plane.

FIG. 3

Xerox Copy Centre

EP 0 346 952 A2

## AN IMPLEMENT FOR MILKING ANIMALS, SUCH AS COWS

The invention relates to a milking implement for animals, such as cows, comprising a milking cluster with teat cups which can be attached to the teats of an animal's udder.

In such an implement it is of utmost importance that a proper hygiene is observed and that, in particular, the risk of contamination of and/or damage to the parts of the milking implement that can be attached to the udder of the animal is reduced to a minimum.

The invention envisages a milking implement, enabling an efficient manner of milking, the risk of damage to or contamination of parts of the milking machine being minimal and a proper attachment of the relative parts of the milking implement to the udder of the animal being ensured.

For this purpose, the milking implement according to the invention is characterized in that the milking cluster with the teat cups are encompassed by an envelope that can be placed around the udder of the animal. Preferably, at least part of the envelope is made from transparent material. Furthermore, the envelope may comprise a flexible upper rim, which ensures a proper attachment against the udder of the animal.

The GB patent specification 918,766 describes a milking implement, whereby the separate teat cups are poured into an envelope encompassing the animal's udder. In that milking implement, the movability of the teat cups with respect to each other is seriously limited.

The Soviet patent specification 667,189 describes a milking implement, whereby the separate teat cups are located in ball joints, fitted in a horizontal bar, which is supported by an envelope encompassing the animal's udder. In that implement too, the movability of the teat cups with respect to each other is rather limited; the implement shows a movability around a vertical axis, but not movability in a horizontal plane.

According to the invention, the envelope can furthermore be attached to the body of the animal by means of a carrying member, said carrying member supporting the teat cups. Particularly the teat cups are connected with a central portion supported by the carrying member.

Furthermore, according to the invention, the teat cups are movable with respect to each other in a horizontal plane. In a special embodiment, the teat cups are thereto attached to said central portion by means of one or more pivots. Through this arrangement the teat cups are supported properly, while at the same time a certain degree of displacement is feasible with a view to obtaining an adaptation to the udder.

Furthermore, according to the invention, the milk conduits connected to respective teat cups are attached to the carrying member. In a preferred embodiment, the carrying member comprises one or more straps or strings, which may be provided on various spots across and around the animal. The carrying member may be adjustable.

In the above arrangement, the animal has a fair degree of room to move, i.e. to walk, stand or lie without the attachment of the milking implement onto the udder of the animal being affected.

For a better understanding of the invention and to show how an installation for milking animals may be carried into effect, reference will now be made, by way of example, to the accompanying drawings, in which:

Figure 1 is a schematic plan view of a parlour:

Figure 2 is a lateral view of a milking site with a cow occupying said place, according to the arrows II in Figure 1;

Figure 3 is a partly rear view of a cow in a milking site according to the arrow III in Figure 2;

Figure 4 is a further detailed lateral view according to a part of Figure 2;

Figure 5 is a schematic cross-section of a milking cluster connected to an udder:

Figure 6 is a bottom view of the milking cluster according to Figure 5;

Figure 7 shows a second embodiment of a milking cluster;

Figure 8 is a bottom view of the milking cluster according to Figure 7 and

Figure 9 is a cross-section of a teat cup.

In the various figures, which are only schematic renderings, corresponding components carry similar reference numerals.

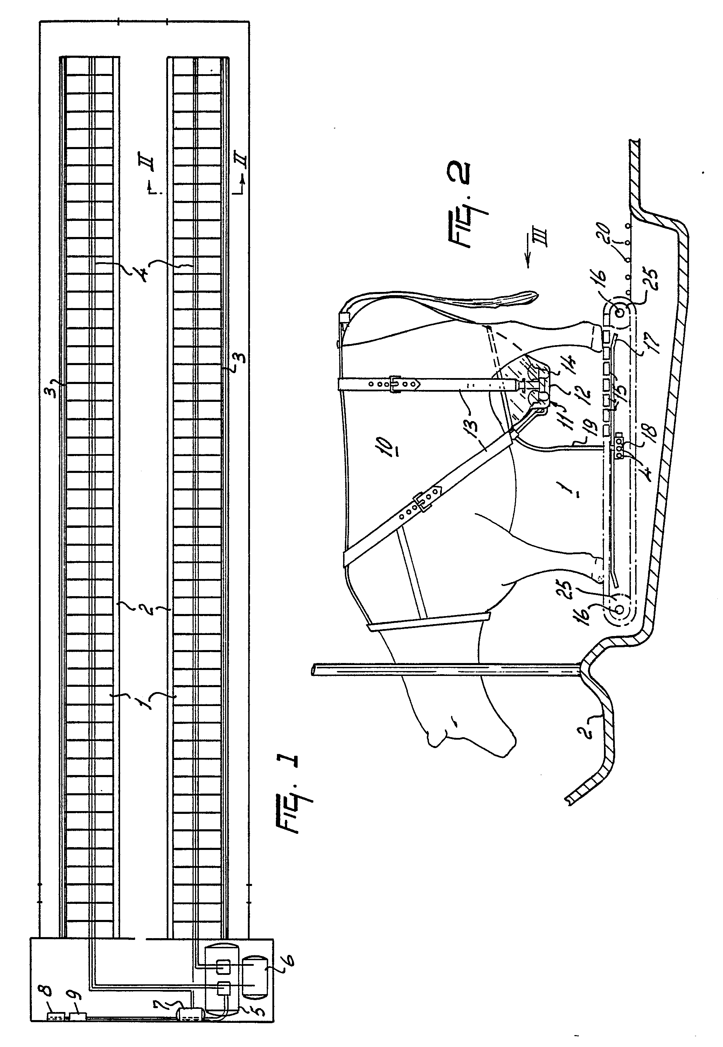

Figure 1 shows a plan view of a parlour which comprises two rows of milking sites 1. The milking sites are provided with a feeding gutter 2 at the front and with a conveyor 3 for discharging manure at the back. In the longitudinal direction of each row of milking sites 1, a set of conduits 4 is arranged underneath the above-mentioned milking sites, said conduits being designed in such a way that an attachment to conduits 4 can be brought about in each milking site. The conduits 4 comprise one or more liquid and/or air pipes. Furthermore, a schematic rendering of a milk tank 5 is given, which also goes for a tank 6 for water, rinsing liquid or cleansing liquid. A tank 7 for compressed air is also rendered. A pump, if at all provided, for bringing about an under-pressure, is not further detailed. The installation may further comprise a computer 8 and control means 9 for an automatic control, check and/or protection of the installation.

Figure 2 shows a cow 10, occupying a milking site. Said cow 10 is provided with a milking cluster 11, which may be permanently connected to the udder of the cow. The milking cluster 11 comprises an envelope 12, made of a transparent synthetic material and attached to the cow by means of straps 13. Contained within the envelope 12 are the teat cups 14, which will be further explained.

The floor of the milking parlour consists of a conveyor with mutually coupled, movable elements 15, linked to one another in the shape of an endless conveyor. The conveyor is provided with two final guiding members 16, about which the elements 15 can move, and with a support 17 to stay the elements 15, constituting the floor of the milking site 1.

The conveyor as described before having been actuated, the elements 15 which constitute the floor of the milking site can move in a rearward direction with regard to the cow, so that the cow is compelled to start walking and defilements, possibly present on the floor, can be discharged in a rearward direction. Near the floor of the milking site a connection box 18 is provided, through which connection box an under-pressure, cleansing or rinsing liquid and/or preheated air can be supplied and milk, and possibly other liquids, discharged. For that purpose the necessary conduits 19 are led from the milking cluster 11 to the connection box 18.

Behind the milking site 1 a grating 20 is rendered, allowing the manure and other defilements, if any, to fall through, then to be transported by discharge means, which are not rendered in Figure 2.

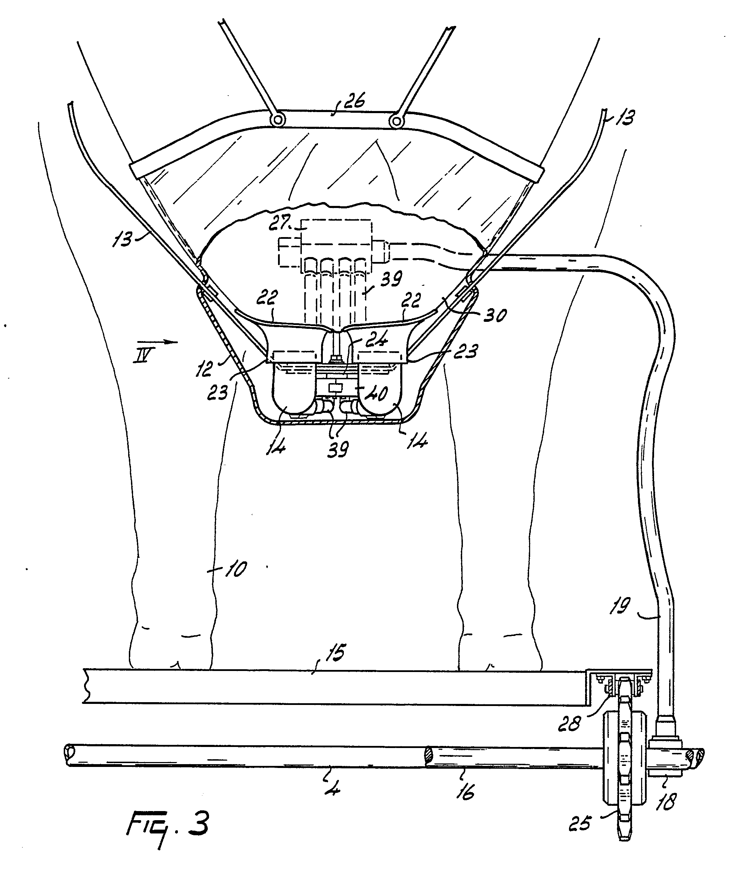

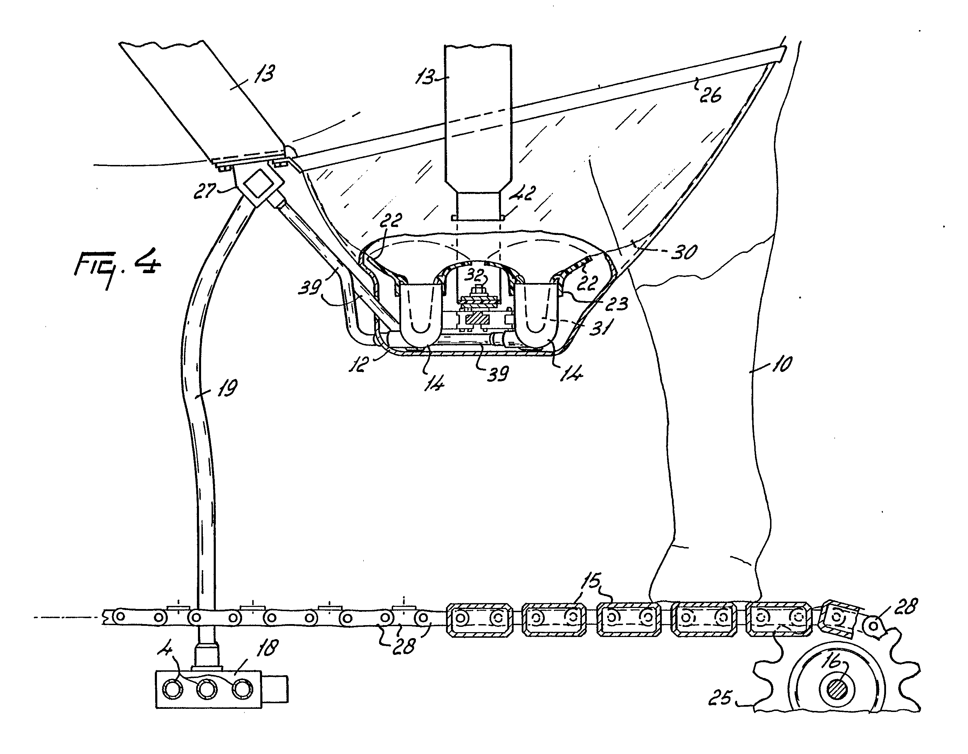

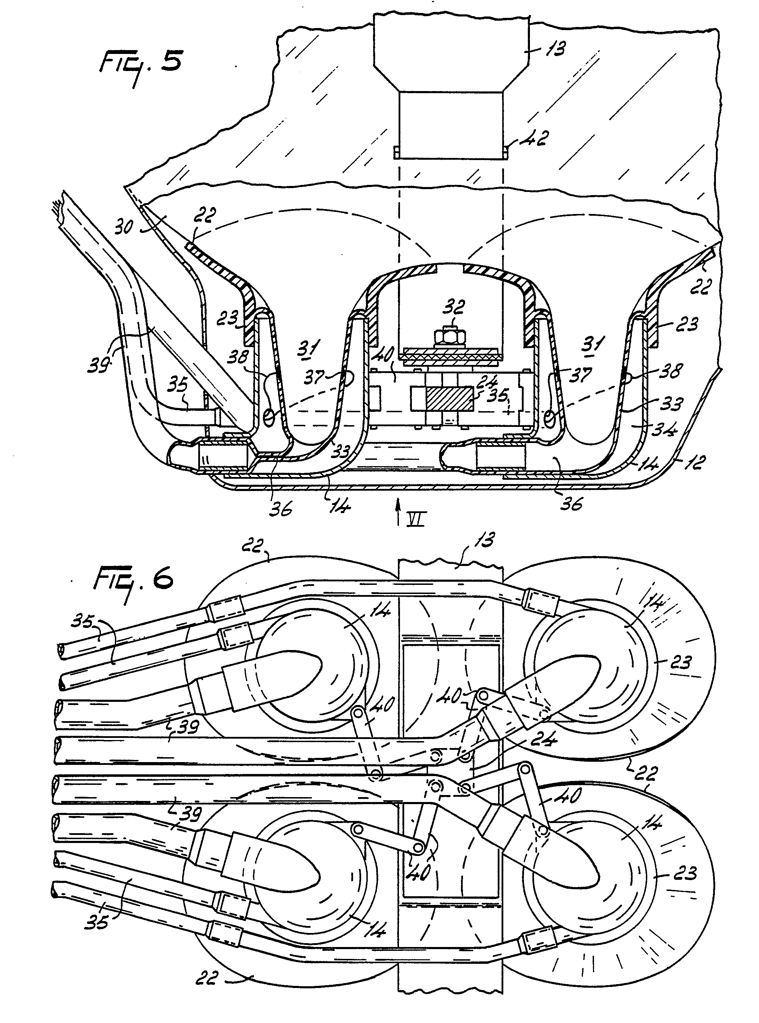

Figure 3 shows a cross-section of the transparent envelope 12, containing four teat cups 14, of which two are visible. The teat cups are provided with a connection, directed forwardly, in view of the necessary conduits. The upper rim 22 of the teat cup is adapted to the shape of the udder, so that a proper attachment to the udder can be obtained. The upper rim 22 is set in the flexible upper part 23 of the teat cup. The straps 13, ensuring the attachment of the milking cluster to the cow, carry both the envelope 12 and a central portion 24, to which the teat cups 14 are connected. Through a flexible conduit 19, containing various pipes, the teat cups are linked with the connection box 18 near the floor of the milking site. The floor of the milking site consists of elements 15, mutually connected and guided around the chain wheels 25, as an endless conveyor. One or more of the chain wheels 25 may be driven by means which are not further defined, such as an electric motor.

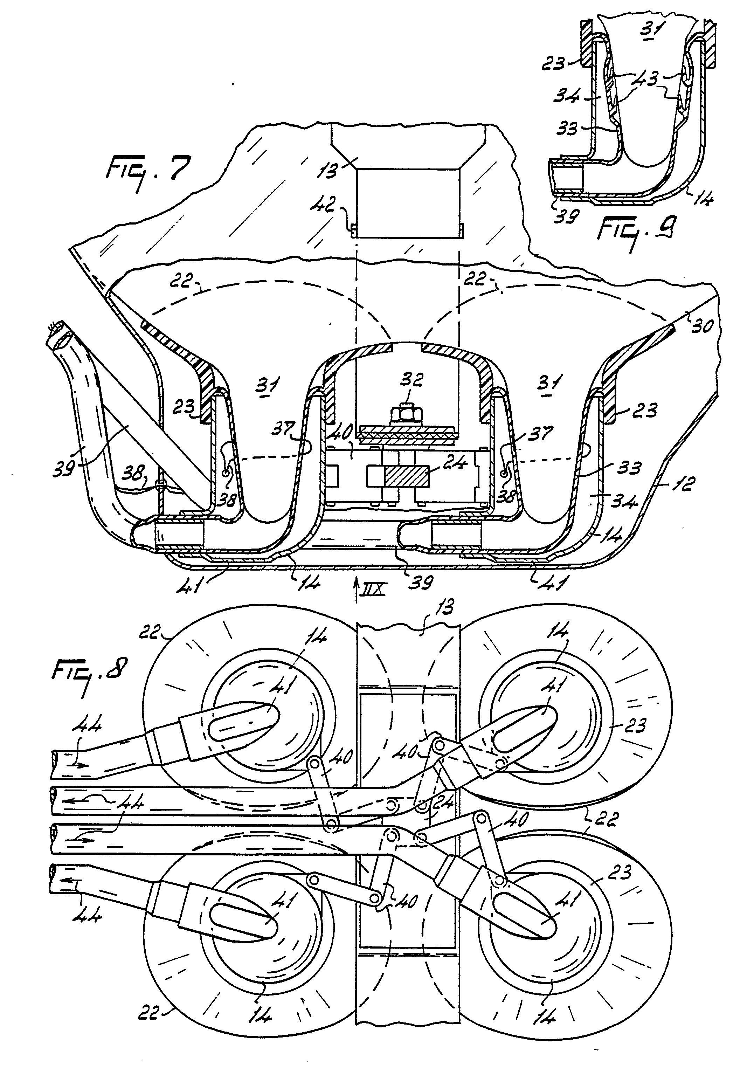

Figure 4 shows, in a way similar to that of Figure 3, the milking cluster in a lateral view. The envelope 12 is provided with a flexible upper rim 26, making it possible to obtain a proper attachment to the udder of the cow. At the front of the envelope 12, a unit 27, attached to one of the straps 13, is rendered. Said unit 27 may comprise a pulsator for achieving a varying air pressure. Furthermore, the unit 27 may comprise the necessary valves and other means for the performance of the milking cluster. A cross-section is given of the elements 15, constituting the floor, said elements consisting of e.g. steel beams with a closed profile and being mutually linked up by means of shackles 28, constituting a chain which engages with the chain wheels 25.

Figure 5 shows in more detail a first embodiment of the milking cluster. It comprises a schematic rendering of the udder 30 with the teats 31 of the cow. The udder 30 is encompassed by the transparent envelope 12 which is attached to the cow by means of a strap 13. Contained within the envelope 12 is a central portion 24, which is also connected to strap 13 by means of a bolt 32. Attached to the central portion 24 are the four teat cups 14, a cross-section of two such cups being provided in Figure 5. The teat cups 14 are provided on the upper side with a flexible top part 23, which may have such a shape that the required attachment to the udder can be obtained. Although the upper part 23 may, because of its flexibility, adapt itself to the shape of the udder, it may be desirable to pre-shape said upper part in such a manner, that a shape is obtained which matches the average size of an udder. In that case the upper part 23 will not have a symmetric shape.

The teat cups 14, rendered in Figure 5, are relatively short, i.e. they have a comparatively small size in height and, accordingly, the teat 31 will extend to the vicinity of the teat cup's lowermost side. Within the teat cup, the teat holder 33 is provided, said holder being integrally connected with the flexible upper part 23 and encompassing the teat when the latter is present in the teat cup. Around the teat holder 33 a chamber 34 is provided, in which a varying air pressure can be brought about via a pulsation conduit, so that the chamber 34 is connected with the pulsator which is not rendered in this Figure. The pulsation hose 35 debouches into the chamber 34 through an aperture 36. Provided in the teat holder 33 are sensors 37, which can detect if the teats occupy a correct position in the teat cup. The sensors 37 are connected by means of electrical conduits 38 to a control unit which is not shown in Figure 5. In the given embodiment said electrical conduits are guided through the pulsation hoses 35.

The milk hoses 39, shown in Figure 5, ensure the discharge of milk and are mounted in a lateral position with regard to the teat cups 14 in such a manner that the total height of the teat cup scarcely exceeds the length of the teat 31. Thus, a compact teat cup can be obtained, its height being less than twice the diameter. Generally speaking, an advantage of such a teat cup is that the parts of the milking cluster do not project downwardly farther than necessary, which reduces the risk of the animal kicking the milking cluster down.

Figure 6 is a schematic bottom view of the milking cluster, shown in Figure 5. Figure 6 renders four milk hoses 39 and four pulsation hoses 35, each of which leads to a teat cup 14. The teat cups 14 are connected, by means of mutually pivotable arms 40, to the central portion that is attached to the strap 13. Accordingly, the teat cups are allowed to move in respect of one another in a substantially level plane, enabled to do so also because the hoses 35 and 39 are sufficiently flexible for that purpose. Therefore, the milking cluster can adapt itself to the position of the teats, which position may vary according to the state or condition of the udder.

Figure 7 shows a second embodiment, without pulsa tion hoses being provided. In this embodiment, too, the teat holder 33 is provided with sensors 37, which are capable of observing the presence and/or correct position of the teats in the teat cups. In said embodiment, the chamber 34 around the teat holder is not subjected to a varying air pressure, but may constitute a resilient air cushion, respectively be equipped with a breather opening, so that the atmospheric air pressure is maintained in chamber 34. Through the milk hose 39 a varying pressure is brought about, e.g. a varying sequence of under-pressure and atmospheric pressure. When an under-pressure prevails, milk is sucked from the teat, while during the period that there is no under-pressure there is a massage of the teat, at least a stimulation of the blood circulation. In order to prevent that during the exertion of under-pressure the locking hole of the teat is blocked, because it comes to rest against the lowermost side of the teat holder, the teat cup 14 is provided with an embossment device 41 which prevents the teat cup from shutting off the locking hole.

As is evident from Figure 7, the strap 13, to which the central portion 24 is connected by means of a bolt 32 via a slotted hole 42, traverses the transparent envelope 12, so that both said envelope 12 and the milking cluster are supported.

Figure 8 shows a bottom view of the milking cluster according to Figure 7. From said Figure it is clear that the embossment devices 41 at the lowermost sides of the teat cups 14 have a slightly protracted shape. It is preferable that the low and high pressure in the various teat cups should be brought about in such a way, that two teat cups, situated diagonally in respect of one another, are subjected simultaneously to a low, respectively to a high pressure, as indicated by the arrows 44. A certain upward movement of the milking cluster may result from the varied suction, which may have a positive influence on the milking process.

Figure 9 shows a teat cup which is provided with a teat holder 33 with substantially annular, upwardly directed lamellae 43. These lamellae 43 may lean against the teat and prevent air from being sucked on along the teat in those periods when an under-pressure prevails in the milk hose. Air or liquid is allowed to escape along the teat, however, if a sufficient exceed pressure is brought about in the milk hose, e.g. during cleansing or drying of the teat.

The embodiments described are merely examples of the application of any or more characteristics of the invention and, accordingly, the invention should not be considered to be restricted to any embodiment given. In this context it is possible that e.g. the milk hoses 39, shown in the Figures 5 and 7, project downwardly straight from the envelope 12, so that liquid contained by said hoses may flow off in an easier manner.

Although certain features of the implement that have been described and/or that are illustrated in the accompanying drawings will be set forth in the following claims as inventive features, it is emphasized that the invention is not necessarily limited to those features and that it includes within its scope each of the parts of the implement that has been described, and/or that is illustrated in the accompanying drawings, both individually and in various combinations.

## Claims

1. A milking implement for animals, such as cows, comprising a milking cluster (11) with teat cups (14) which can be attached to the teats (31) of an animal's udder (30), characterized in that the milking cluster (11) with the teat cups (14) are encompassed by an envelope (12) that can be placed around the udder (30) of the animal.

2. A milking implement as claimed in claim 1, characterized in that at least a part of the envelope (12) is made from transparent material.

3. A milking implement as claimed in claim 1 or 2, characterized in that the envelope comprises a flexible upper rim.

4. A milking implement as claimed in claim 1, 2 or 3, characterized in that the envelope (12) can be attached to the body of the animal by means of a carrying member (13), said carrying member (13) supporting the teat cups (14).

5. A milking implement as claimed in claim 4, characterized in that the teat cups (14) are connected with a central portion (24) supported by the carrying member (13).

6. A milking implement as claimed in claim 5, characterized in that the teat cups are movable with respect to each other in a horizontal plane.

7. A milking implement as claimed in claim 5 or 6, characterized in that the teat cups (14) are attached to said central portion (24) by means of one or more pivots.

8. A milking implement as claimed in any one of claims 4 to 7, characterized in that the milk conduits (39) connected to respective teat cups (14) are attached to the carrying member (13.)

9. An implement as claimed in any one of claims 4 to 8, characterized in that the carrying member (13) comprises one or more straps or strings, which may be provided on various spots across and around the animal.

10. An implement as claimed in any one of claims 4 to 9, characterized in that the carrying member (13) is adjustable.

FIG. 1

FIG. 2

EP 0 346 952 A2

FIG. 3

FIG. 4

FIG. 5

FIG. 6

FIG. 7

FIG. 9

FIG. 8